# DEMANDE DE BREVET EUROPEEN

(11) **EP 4 779 955 A1**
(43) Date de publication de la demande: **22.07.2026**
(21) Numéro de dépôt: 25220550.5
(22) Date de dépôt: 03.12.2025
(51) Int. Cl.: H04L 67/12, H04L 69/14, H04W 4/40

(54) **DISPOSITIF POUR COMMANDE DE TELECOMMUNICATIONS DE VEHICULE, ET PROCEDE METTANT EN OEUVRE LE DISPOSITIF**

(30) Priorité: 17.01.2025 FR 2500501
(71) Demandeur: Stellantis Auto SAS, 78300 Poissy (FR); FCA US LLC, Auburn Hills, MI 48326-2766 (US)
(72) Inventeur: DIZAMBOURG, LAURENT, 91190 GIF SUR YVETTE (FR); MARCATEL, MATTHIEU, 94100 SAINT MAUR DES FOSSES (FR); FEINGOLD, LAURENT, 91400 SACLAY (FR)
(74) Mandataire: ESIP

(57) **Abrégé**

L'invention concerne un dispositif pour commande de télécommunications de véhicule et un procédé mettant en œuvre le dispositif. Le dispositif comprend :
- un premier boîtier télématique (10) comprenant un premier modem (11), le premier modem (11) ;
- un deuxième boîtier télématique (20) comprenant un deuxième modem (21) et un troisième modem (22) respectivement configurés pour être commandés dans un état activé ou dans un état désactivé ;
- une unité de contrôle (30) reliée à une pluralité de capteurs, l'unité de contrôle (30) étant configurée pour commander le deuxième modem (21) ou le troisième modem (22) dans l'état activé ou dans l'état désactivé.

## Description

L'invention concerne des procédés et dispositifs pour commande de télécommunications de véhicule.

Il est décrit dans la demande de brevet US10609529 un véhicule comprenant un dispositif comprenant un moyen de transmission multivoies et un planificateur. Le moyen de transmission multivoies est connecté à un premier modem, un deuxième modem et un troisième modem. Le moyen de transmission multivoies transmet une pluralité de paquet au premier modem, au deuxième modem et/ou au troisième modem. Le planificateur mesure une valeur de délai de livraison de la pluralité de paquet transmis. Le dispositif répartit au premier modem, au deuxième modem et au troisième modem la pluralité de paquet de façon à obtenir une communication fiable et rapide.

Cependant, dans certaines situations critiques, par exemple une zone de forte averse ou de forte densité de véhicule, la réactivité fournie par le dispositif décrit, basée sur le partage d'informations, n'est pas suffisante pour déployer la redondance d'information nécessaire tout en maintenant une qualité de service adéquate à la criticité de la situation.

L'invention a pour objectif de remédier à cet inconvénient en proposant un dispositif pour commande de télécommunications de véhicule plus fiable.

Ainsi, pour atteindre cet objectif, l'invention propose un dispositif pour commande de télécommunications de véhicule, le dispositif comprenant :
- un premier boîtier télématique comprenant un premier modem, le premier modem ;
- un deuxième boîtier télématique comprenant un deuxième modem et un troisième modem respectivement configurés pour être commandés dans un état activé ou dans un état désactivé ;
- une unité de contrôle reliée à une pluralité de capteurs, l'unité de contrôle étant configurée pour commander le deuxième modem ou le troisième modem dans l'état activé ou dans l'état désactivé.

Un tel dispositif sécurise la connectivité pour le véhicule, par exemple un véhicule autonome, non seulement à partir des données réseau mais aussi à partir d'autres informations contextuelles décrivant l'environnement où évolue le véhicule autonome. Cela permet donc d'anticiper ou d'accélérer l'activation d'un modem sans pour autant nécessiter l'ajout de capteurs supplémentaires sur le véhicule. De ce fait, le véhicule peut franchir la zone présentant une situation critique en sécurité.

Avantageusement, le dispositif comprend :
- un premier microprocesseur relié électriquement au premier modem ;
- un deuxième microprocesseur relié électriquement au deuxième modem et au troisième modem.

Avantageusement, le dispositif comprend :
- un premier câble de connexion reliant le premier boîtier télématique à l'unité de contrôle ;
- un deuxième câble de connexion reliant le deuxième boîtier télématique à l'unité de contrôle.

Avantageusement, le dispositif comprenant :
- un premier câble de connexion reliant le premier boîtier télématique à l'unité de contrôle ;
- un deuxième câble de connexion reliant le premier boîtier télématique au deuxième boîtier télématique.

Avantageusement, le dispositif comprend :
- un premier module d'antenne relié au premier modem ;
- un deuxième module d'antenne relié au deuxième modem.

Avantageusement, le premier module d'antenne comprend deux cellules de communication reliées au premier modem, le deuxième module d'antenne comprend une première pluralité de cellules de communication reliées au deuxième modem et le deuxième module d'antenne comprend une deuxième pluralité cellules de communication reliées au troisième modem.

Avantageusement, la pluralité de capteurs comprend un capteur de luminosité, un capteur de pluie, un capteur d'aspérité de route, un lidar, une caméra et/ou un capteur de positionnement.

L'invention concerne également un procédé pour commande de télécommunications de véhicule, mettant en œuvre un dispositif tel que défini précédemment, le procédé comprenant les étapes suivantes :
- une étape de mesure une pluralité de valeurs de paramètres par la pluralité de capteurs ;
- une étape de calcul d'une valeur de criticité à partir de la pluralité de valeurs de paramètres mesurés ;
- une étape de commande du deuxième modem dans l'état activé lorsque la valeur de criticité calculée est supérieure à la première valeur de criticité prédéterminée, la valeur de criticité calculée étant inférieure à une deuxième valeur de criticité prédéterminée, le troisième modem étant dans l'état désactivé ;
- une étape de commande du troisième modem dans l'état activé lorsque la valeur de criticité calculée est supérieure à la deuxième valeur de criticité prédéterminée, le deuxième modem étant dans l'état activé.

L'invention concerne par ailleurs un programme d'ordinateur comprenant des instructions de code de programme pour l'exécution des étapes du procédé tel que défini précédemment, lorsque ledit programme fonctionne sur un ordinateur.

L'invention concerne en outre un véhicule comprenant :
- un dispositif défini tel que précédemment ;
- un support d'enregistrement lisible par un ordinateur sur lequel est enregistré un programme d'ordinateur comprenant des instructions pour l'exécution des étapes du procédé défini tel que précédemment.

L'invention sera davantage détaillée par la description de modes de réalisation non limitatifs, et sur la base des figures annexées illustrant des variantes de l'invention, dans lesquelles :
- [Fig.1] illustre schématiquement un dispositif pour commande de télécommunications de véhicule selon un mode de réalisation de la présente invention.
- [Fig.2] illustre un logigramme représentant des étapes d'un procédé pour commande de télécommunications de véhicule selon un mode de réalisation de la présente invention.

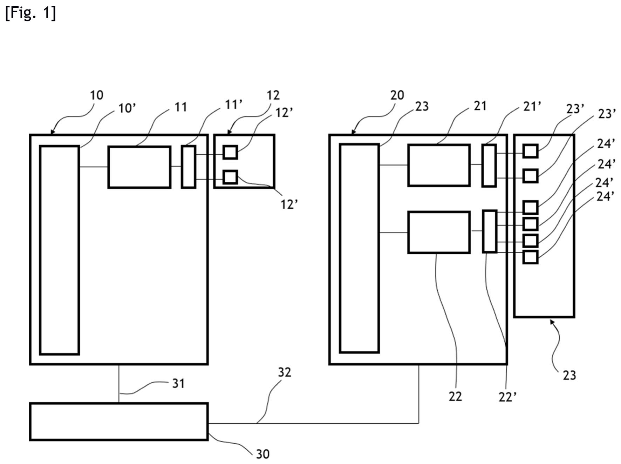

Il est illustré schématiquement sur la figure 1 un dispositif pour commande de télécommunications de véhicule selon un mode de réalisation de la présente invention.

Le dispositif comprend un premier boîtier télématique 10 et un deuxième boîtier télématique 20. Le premier boîtier télématique 10 comprend un premier modem 11. Le deuxième boîtier télématique 20 comprend un deuxième modem 21 et un troisième modem 22. Chaque modem est configuré pour établir un canal de communication avec un réseau de communication cellulaire d'au moins un opérateur de télécommunication.

Par exemple, chaque réseau de communication cellulaire est un réseau 4G basé sur LTE (de l'anglais « Long-Term Evolution » ou en français « Evolution à long terme »), LTE-Advanced (ou en français LTE-avancé) ou 5G, ou un réseau cellulaire de type C-V2X (de l'anglais « Cellular - Vehicle to Everything » ou en français « Cellulaire - Véhicule vers tout ») s'appuyant sur la 4G basée sur LTE ou la 5G. Alternativement, le réseau de communication est de type Wifi^{®} selon la famille de normes IEEE 802.11, par exemple selon l'une des normes IEEE 802.11b ou 802.11g (bande de fréquence 2,4 - 2,5 GHz), IEEE 802.11n (bande de fréquence 2,4 et/ou 5 GHz), IEEE 802.11ac (bande de fréquence 5,15 - 5,35 GHz ou 5,47 - 8,875 GHz), IEEE 802.11ax (2,4 GHz, 5GHz ou 6 GHz) ou encore 802.11p (bande de fréquence 5,85 - 8,925 GHz pour la mise en œuvre de communications de type V2X (de l'anglais « Vehicle-to-Everything » ou en français « Véhicule vers tout »).

Le deuxième boîtier télématique 20 et le troisième boîtier télématique sont respectivement configurés pour être commandés dans un état activé ou dans un état désactivé.

Le dispositif comprend une unité de contrôle 30 reliée à une pluralité de capteurs. La pluralité de capteurs comprend avantageusement un capteur de luminosité, un capteur de pluie, un capteur d'aspérité de route, un lidar, une caméra et/ou un capteur de positionnement. Par exemple, le capteur de positionnement est du type GPS (de l'anglais « Global Positioning System » ou en français « Système de positionnement global »), Galileo ou GLONASS. Ainsi, le capteur de positionnement permet de connaître la position géographique du dispositif. La pluralité de capteurs comprend par ailleurs un moyen de mesure inertielle. Le moyen de mesure inertielle permet d'affiner le positionnement obtenu par le capteur de positionnement, notamment en faisant des mesures d'accélération du véhicule.

Le dispositif comprend avantageusement un premier microprocesseur 10' et un deuxième microprocesseur 20'. Le premier microprocesseur 10' est relié électriquement au premier modem 11. Le deuxième microprocesseur 20' est relié électriquement au deuxième modem 21 et au troisième modem 22.

Le dispositif comprend avantageusement un premier câble de connexion 31 reliant le premier boîtier télématique 10 à l'unité de contrôle 30. Par ailleurs, le dispositif avantageusement un deuxième câble de connexion 32 reliant le deuxième boîtier télématique 20 à l'unité de contrôle 30. Alternativement, le dispositif comprend avantageusement un premier câble de connexion 31 reliant le premier boîtier télématique 10 à l'unité de contrôle 30. Par ailleurs, le dispositif comprend avantageusement un deuxième câble de connexion 32 reliant le premier boîtier télématique 10 au deuxième boîtier télématique 20. Par exemple, le premier câble de connexion 31 et le deuxième câble de connexion 32 sont de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802-3).

Le dispositif comprend avantageusement un premier module d'antenne 12 et un deuxième module d'antenne 23. Le deuxième module d'antenne 23 comprend de préférence une première pluralité de cellules de communication 23' reliées au deuxième modem 21. La première pluralité de cellules de communications 23' se dénombre de préférence à deux cellules de communications. La première pluralité de cellules de communications 23' est typiquement reliée au deuxième modem par un multiplexeur à deux entrées et deux sorties 21'. Le deuxième module d'antenne 23 comprend de préférence une deuxième pluralité de cellules de communication 24' reliées au troisième modem 22. La deuxième pluralité de cellules de communications 24' se dénombre de préférence à quatre cellules de communications. La deuxième pluralité de cellules de communications est typiquement reliée au troisième modem 22 par un multiplexeur à quatre entrées et quatre sorties 22'. Le premier module d'antenne 12 est relié au premier modem 11. Le deuxième module d'antenne 23 est relié au deuxième modem 21. De préférence, le premier module d'antenne 12 comprend une troisième pluralité de cellules de communication 12' reliées au premier modem 11 typiquement par un multiplexeur à deux entrées et deux sorties 11'. De préférence, la troisième pluralité de cellules de communication se dénombre à deux cellules de communication. En pratique, les multiplexeurs sont de type mimo (de l'anglais « multiple-input multiple output »).

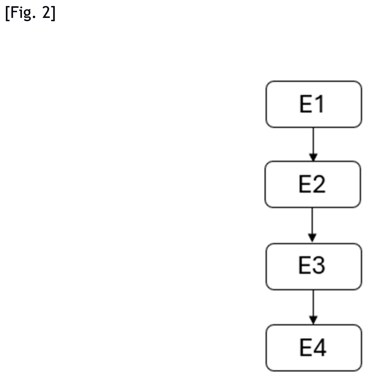

Il est illustré sur la figure 2 un logigramme représentant des étapes d'un procédé pour commande de télécommunications de véhicule selon un mode de réalisation de la présente invention.

Dans une étape de mesure E1, une pluralité de valeurs de paramètres est mesurée par la pluralité de capteurs. La pluralité de valeurs de paramètres est mesurée typiquement de l'ordre de la milliseconde. De manière avantageuse, l'unité de contrôle est configurée pour recevoir la pluralité de valeurs de paramètres à distance, par exemple à partir d'autres véhicules.

Dans une étape de commande E2, une valeur de criticité est calculée à partir de la pluralité de valeurs de paramètres mesurés.

Dans une étape de commande E3, le deuxième modem 21 est commandé dans l'état activé lorsque la valeur de criticité calculée est supérieure à la première valeur de criticité prédéterminée, la valeur de criticité calculée étant inférieure à une deuxième valeur de criticité prédéterminée, le troisième modem 22 étant dans l'état désactivé.

Dans une étape de commande E4, un troisième modem 22 est commandé dans l'état activé lorsque la valeur de criticité calculée est supérieure à la deuxième valeur de criticité prédéterminée, le deuxième modem 21 étant dans l'état activé.

De préférence, le deuxième modem 21 et le troisième modem 22 sont commandés par l'unité de contrôle 30 par le deuxième câble de connexion 32 lorsque le deuxième câble de connexion 32 relie électriquement l'unité de contrôle 30 et le deuxième boîtier télématique 20. Alternativement, le deuxième modem 21 et le troisième modem 22 sont commandés par le premier boîtier télématique 10 par le deuxième câble de connexion 32 lorsque le deuxième câble de connexion 32 relie électriquement le premier boîtier télématique 10 et le deuxième boîtier télématique 20. L'unité de contrôle 30 est configurée pour commander le deuxième modem 21 ou le troisième modem 22 dans l'état activé ou dans l'état désactivé.

## Revendications

1. Dispositif pour commande de télécommunications de véhicule, le dispositif comprenant :
- un premier boîtier télématique (10) comprenant un premier modem (11), le premier modem (11) ;
- un deuxième boîtier télématique (20) comprenant un deuxième modem (21) et un troisième modem (22) respectivement configurés pour être commandés dans un état activé ou dans un état désactivé ;
- une unité de contrôle (30) reliée à une pluralité de capteurs, l'unité de contrôle (30) étant configurée pour commander le deuxième modem (21) ou le troisième modem (22) dans l'état activé ou dans l'état désactivé.

2. Dispositif selon la revendication 1, **caractérisé en ce que** le dispositif comprend :
- un premier microprocesseur (10') relié électriquement au premier modem (11) ;
- un deuxième microprocesseur (20') relié électriquement au deuxième modem (21) et au troisième modem (22).

3. Dispositif selon la revendication 1 ou 2, **caractérisé en ce que** le dispositif comprend :
- un premier câble de connexion (31) reliant le premier boîtier télématique (10) à l'unité de contrôle (30) ;
- un deuxième câble de connexion (32) reliant le deuxième boîtier télématique (20) à l'unité de contrôle (30).

4. Dispositif selon la revendication 1 ou 2, **caractérisé en ce que** le dispositif comprenant :
- un premier câble de connexion (31) reliant le premier boîtier télématique (10) à l'unité de contrôle (30) ;
- un deuxième câble de connexion (32) reliant le premier boîtier télématique (10) au deuxième boîtier télématique (20).

5. Dispositif selon l'une quelconque des revendications 1 à 4, **caractérisé en ce que** le dispositif comprend :
- un premier module d'antenne (12) relié au premier modem (11) ;
- un deuxième module d'antenne (23) relié au deuxième modem (21).

6. Dispositif selon la revendication 5, **caractérisé en ce que** le premier module d'antenne (12) comprend deux cellules de communication (12') reliées au premier modem (11), le deuxième module d'antenne (23) comprend une première pluralité de cellules de communication (23') reliées au deuxième modem (21) et le deuxième module d'antenne (23) comprend une deuxième pluralité de cellules de communication (24') reliées au troisième modem (22).

7. Dispositif selon l'une quelconque des revendications 1 à 6, **caractérisé en ce que** la pluralité de capteurs comprend un capteur de luminosité, un capteur de pluie, un capteur d'aspérité de route, un lidar, une caméra et/ou un capteur de positionnement.

8. Procédé pour commande de télécommunications de véhicule, mettant en œuvre un dispositif selon l'une quelconque des revendications 1 à 7, le procédé comprenant les étapes suivantes :
- une étape de mesure (E1) une pluralité de valeurs de paramètres par la pluralité de capteurs ;
- une étape de calcul (E2) d'une valeur de criticité à partir de la pluralité de valeurs de paramètres mesurés ;
- une étape de commande (E3) du deuxième modem (21) dans l'état activé lorsque la valeur de criticité calculée est supérieure à la première valeur de criticité prédéterminée, la valeur de criticité calculée étant inférieure à une deuxième valeur de criticité prédéterminée, le troisième modem (22) étant dans l'état désactivé ;
- une étape de commande (E4) du troisième modem (22) dans l'état activé lorsque la valeur de criticité calculée est supérieure à la deuxième valeur de criticité prédéterminée, le deuxième modem (21) étant dans l'état activé.

9. Programme d'ordinateur comprenant des instructions de code de programme pour l'exécution des étapes du procédé pour commande de télécommunications de véhicule selon la revendication 8, lorsque ledit programme fonctionne sur un ordinateur.

10. Véhicule comprenant :
- un dispositif selon l'une quelconque des revendications 1 à 7 ;
- un support d'enregistrement lisible par un ordinateur sur lequel est enregistré un programme d'ordinateur comprenant des instructions pour l'exécution des étapes du procédé selon la revendication 8.
